Europäisches Patentamt

European Patent Office

Office européen des brevets

(11) Publication number: **0 372 681**
**A1**

(12) # EUROPEAN PATENT APPLICATION

(21) Application number: **89308143.0**

(51) Int. Cl.⁵: **C08K 5/10, C08L 59/02**

(22) Date of filing: **10.08.89**

(30) Priority: **02.12.88 JP 305514/88**

(43) Date of publication of application:
**13.06.90 Bulletin 90/24**

(84) Designated Contracting States:
**DE FR GB**

(71) Applicant: **POLYPLASTICS CO. LTD.**
**3-13, Azuchicho, 2-chome**
**Chuo-Ku Osaka-shi Osaka(JP)**

(72) Inventor: **Endo, Toshihiko 324 Miyashita**
**Fuji-shi**
**Shizuoka(JP)**
Inventor: **Fukui, Kiichiro**
**1427-31 Atsuhara Fuji - shi**
**Shizuoka(JP)**
Inventor: **Kanoto, Osamu**
**885-11 Miyajimi**
**Fuji-shi Shizuoka(JP)**
Inventor: **Suzuki, Masayuki**
**7-5-4, Fujimidai**
**Fuji-shi Shizuoka(JP)**
Inventor: **Matsunaga, Nobuyuki**
**104 Kamiyokowari**
**Fuji-shi Shizuoka(JP)**

(74) Representative: **Taylor, Phillip Kenneth et al**
**W.P. THOMPSON & CO. Coopers Building**
**Church Street**
**Liverpool L1 3AB(GB)**

(54) **Polyacetal resin composition and sliding parts made therefrom.**

(57) The application relates to a polyacetal resin composition having an improved sliding property, which comprises a polyacetal resin characterised by having incorporated therein, a fatty acid ester of a fatty acid having at least 21 carbon atoms with a polyhydric alcohol, the fatty acid ester being present in an amount of from 0.05 to 10% by weight based on the combined weight of the polyacetal resin and the fatty acid ester. The application also includes sliding parts prepared from such compositions, such as a tape-travelling guide roller or guide pole.

## POLYACETAL RESIN COMPOSITION AND SLIDING PARTS MADE THEREFROM

The present invention relates to a polyacetal resin composition having excellent abrasion and friction characteristics, which does not generate a sliding sound (grate) on sliding, and also to a sliding part, especially a guide roller or guide pole for travelling of a tape such as a magnetic tape for a VTR or an 8-mm video (hereinafter referred to merely as "tape"), which is prepared from this polyacetal resin composition.

A polyacetal resin has balanced mechanical properties and are excellent in abrasion resistance, friction resistance, chemical resistance, heat resistance and electric characteristics, and therefore, the polyester resin is widely used in the field of sliding parts of automobiles, electric appliances and electronic appliances. Required levels of these characteristics have been increasing in this field, and the requirement of improvement of the sliding characteristics and long-time duration of this improvement is one of these requirements.

Such sliding characteristics include not only the friction coefficient but also the sliding sound or rubbing noise on sliding as important characteristics.

As typical instances of a sliding part in which a high level of the sliding characteristics is required, there can be mentioned guide rollers and guide poles used for the system of travelling of tapes for a VTR and an 8-mm video.

A polyacetal resin has mainly been used as the material for guide rollers and the like. Recently, the tape travelling speed increases, and it is very difficult at the present to simultaneously satisfy all of requirements concerning sliding characteristics, for example, to minimise rise of the rotation torque during long-time use, melting of the friction surface and generation of the sliding sound, by the conventional polyacetal resin composition.

Accordingly, in order to improve the sliding characteristics, other resins such as a fluororesin, a polyolefin resin or a silicone resin, a solid lubricant such as graphite or molybdenum disulfide, or a fatty acid, a silicone oil or a mineral oil are added to the polyacetal resin.

The sliding characteristics inclusive of the sliding sound characteristic are improved to some extent by incorporation of a fluororesin or a polyolefin resin, but because of poor compatibility with the polyacetal resin, incorporation of such a resin results in peeling of the surface of the resulting molded article or formation of a precipitate on the surface of a mold.

Addition of a solid lubricant such as graphite or molybdenum disulfide is not effective in that the sliding characteristics are gradually degraded because of powder formed by abrasion.

Addition of a lubricating oil is effective in reducing the friction coefficient or the relative abrasion quantity, but improvement of the sliding sound characteristic is insufficient and such problems as difficult extrusion, insufficient bite of a screw at the molding step and insufficient plasticization occur. In an extreme case, molding becomes impossible. Furthermore, according to the conventional method, excellent sliding characteristics are temporarily obtained, but during long-time use, some change occurs on the sliding surface and such problems as rise of the rotation torque often occur.

As is apparent from the foregoing description, according to known methods, it is very difficult to obtain a resin composition for sliding parts, which have a molding processability and show excellent sliding characteristics either temporarily or during long-time use, and which are especially suitable for guide rollers and guide poles of a VTR and an 8-mm video, while showing excellent friction and abrasion characteristics on sliding contact with a metal shaft or a tape travelling at a high speed, having excellent effects of preventing the occurrence of the change on the friction surface due to melting during long-time use, the rise of the rotation torque and the generation of sliding sounds and having well-balanced excellent sliding characteristics either temporarily or over a long period. Accordingly, further improvements are desired.

It has now been surprisingly found that by adding specific fatty acid esters into a polyacetal resin, the sliding sound or rubbing sound characteristic is substantially improved and a polyacetal resin composition which is excellent in other general properties such as friction characteristics and moldability is obtained.

More specifically, in accordance with the present invention, there is provided a polyacetal resin composition having an improved sliding property, which comprises a polyacetal resin and, incorporated therein, a fatty acid ester of a fatty acid having at least 21 carbon atoms with a polyhydric alcohol, in an amount of from 0.05 to 10% by weight, based on the combined weight of polyacetal resin and fatty acid ester. The invention also includes a sliding part, especially a guide roller or a guide pole, prepared from this resin composition.

Either a polyacetal homopolymer or a polyacetal copolymer having a main chain composed mainly of an oxymethylene chain can be used as the polyacetal resin in the present invention. Furthermore, a polyacetal modified by closslinking or graft copolymerization according to a known process can be used as the base resin and the intended effects of the present invention can be attained. The polymerization degree is not particulary critical, so long as molding (extrusion) is possible.

The fatty acid esters used in the present invention are esters of fatty acids having at least 21 carbon atoms with polyhydric alcohols.

As examples of the fatty acid constituting the fatty acid ester, there can be mentioned behenic acid, lignoceric acid, cerotic acid, heptacosanoic acid, montanic acid, melissic acid, lacceric acid, cetoleic acid and erucic acid. As examples of the polyhydric alcohol constituting the ester, there can be mentioned ethylene glycol, polyethylene glycol, propylene glycol, butanediol, glycerol, erythritol and pentaerythritol.

Esters comprising fatty acids and polyhydric alcohols described below are preferred.

Fatty acids:

Behenic acid, cerotic acid, montanic acid and erucic acid.

Polyhydric alcohols:

Ethylene glycol, polyethylene glycol, propylene glycol, glycerol and pentaerythritol.

Polyethylene glycol monobehenate, ethylene glycol dibehenate, glycerol monoerucate and glycerol monobehenate are especially preferred.

Addition of a known fatty acid ester of a fatty acid having up to 20 carbon atoms with an alcohol is more effective in improving sliding characteristics, especially sliding characteristics with respect to tapes travelling at a high speed and metal shafts, than other known lubricants, but if this fatty acid ester is incorporated in sufficient quantity for attaining enhanced sliding characteristics, it is difficult to incorporate and disperse the fatty acid ester homogeneously, and slipping of the resin on a screw of an extruder at the step of kneading the resin with the additive is caused and such troubles as the surging phenomenon and the overflowing of the unmolten resin from a vent hole occur, rendering the preparation of a homogeneous composition difficult. Moreover, such problems as insufficient bite and insufficient plasticization arise, and maintenance of enhanced sliding characteristics during long-time use, intended in the present invention, is hardly attained.

Use of an inorganic or organic polymeric carrier for supporting the lubricant has been proposed for eliminating these disadvantages. However, use of this carrier often has bad influences on other physical properties and a sufficient improvement cannot always be attained.

In contrast, if a specific fatty acid ester of a fatty acid having at least 21 carbon atoms with a polyhydric alcohol is added according to the present invention, the above-mentioned defects of the previously used fatty acid esters are eliminated and properties required of sliding parts are dramatically improved even without using a particular carrier, and excellent effects are attained especially sliding characteristics required of parts for travelling of tapes in a VTR, an 8-mm video and the like and these excellent sliding characteristics are maintained during long-time use. Accordingly, a material suitable for sliding parts, especially guide rollers and guide poles for travelling of tapes, can be provided.

In the present invention, this fatty acid ester is incorporated in an amount of 0.05 to 10% by weight (based on the combined weight of polyacetal resin and fatty acid ester). If the amount of the incorporated fatty acid ester is smaller than 0.05% by weight, the intended effect of improving the sliding characteristics cannot be attained. In contrast, if the amount of the incorporated fatty acid ester exceeds 10% by weight, the properties of the polyacetal as the substrate are drastically degraded. It is preferred that the amount of the incorporated fatty acid ester be 0.1 to 5% by weight.

Known stabilizers can be incorporated in the composition of the present invention for reinforcing the stability. Moreover, known additives can be incorporated for improving physical properties according to intended uses. As additives, there can be mentioned colorants, lubricants (other than the above-mentioned fatty acid ester), release agents, nucleating agents, antistatic agents, other surface active agents, polymers other than the polyacetal, and organic modifiers.

The composition and molded article of the present invention can easily be prepared by known methods adopted in the preparation of resin compositions. For example, there can be adopted a method in which the respective components are mixed, the mixture is kneaded and extruded by a single-screw or twin-screw extruder to form pellets and the pellets are molded, and a method in which pellets (master batches) differing in the composition are prepared, the pellets are mixed (diluted) at a predetermined ratio and the mixture is molded to obtain a molded article having an intended composition.

In the preparation of the composition, there is preferably adopted a method in which a part of the polyacetal resin is pulverized and then mixed with the remaining components and extrusion or the like is then carried out. If this method is adopted, the dispersibility of the additives is improved.

As is apparent from the foregoing description and Examples, the polyacetal resin composition comprising a polyacetal resin and a specific fatty acid ester incorporated therein is highly improved in the sliding characteristics, especially the sliding sound (grate) characteristic, over conventional compositions in which lubricating oils or fatty acid esters of a fatty acid having up to 20 carbon atoms with an alcohol are incorporated for the same purpose as in the present invention, and this polyacetal resin composition provides preferred sliding parts.

Moreover, when this polyacetal resin composition is used, difficulties often encountered at the extrusion and molding steps in case of conventional materials of this type are eliminated, and segregation of the components is not caused.

Because of these excellent properties as the sliding material, the polyacetal resin composition is preferably used for the production of audio and video parts, for example, guide rollers and guide poles for travelling of tapes in a VTR and an 8-mm video, and also for the production of substitutes for sintered alloy bearings (motor bearings, end brackets and capstan bearings). Moreover, a sheet prepared by extrusion of the polyacetal resin composition of the present invention is suitably used for the production of thrust washers, mold chassis for VTRs, tape recorders, watches, facsimiles computers and other office automation appliances, and mechanical parts such as control cams, slide levers and gears. Furthermore, the polyacetal resin composition of the present invention can be used for outer cases of VHS-C casettes and audio cassettes, for example, for integration of the resin with a metal shaft of a VHS-C cassette, elimination of a slide sheet in an audio cassette and construction of a 3.5" FD shell. Still in addition, the polyacetal resin composition can be suitably used for stems and cases of various switches and guides of automobile cables.

Brief Description of the Drawings:

Figs. 1(A) and 1(B) are side and plan views showing the guide roller used in the practical working test.

Fig. 2 is a plan view showing the shaft used in the practical working test in the state combined with the guide roller shown in Fig. 1.

Figs. 3(A) and 3(B) illustrating diagrammatically the tester for measuring the current value as a criterion indicating the change of the rotation torque of the guide roller.

In the drawings the following numerals designate the following parts:

1... guide roller, 2... shaft, 3... rotation motor, 4... ampere meter, 5... rotary disk (metal sheet having a rubber bonded to the circumferential portion thereof), 6... spring, P... contact load (l00g)

The invention is preferred to relate to a composition which comprises 90 to 99.95 percent by weight of a polyacetal and an ester comound obtained from a fatty acid having from 21 to 32 carbon atoms and a polyhydric alcohol.

The present invention will be described in more detail with reference to the following Examples that by no means limit the scope of the invention.

Examples 1 through 6 and Comparative Examples 1 through 4

Glycerol monobehenate, ethylene glycol dibehenate or glycerol monoerucate was incorporated at a ratio shown in Table 1 into a polyacetal resin (Duracon supplied by Polyplastics K.K.) and the mixture is melt-kneaded by a twin-screw extruder to prepare a pelletized composition. A test piece was prepared from this pellet by injection molding and was then evaluated.

For comparison, a composition free of the fatty acid ester and a composition in which stearyl stearate, which is a fatty acid ester outside the scope of the present invention, was incorporated were similarly evaluated. The obtained results are shown in Table 1.

Evaluation items and evaluation methods are as follows. Extrusion Processability (observation at preparation of composition pellet):

Extrusion was carried out by using a vented twin-screw extruder having an inner diameter of 30mm, and the extrusion state was observed. Overflowing from the vent hole, the foaming state of the strand and the surging phenomenon during the extrusion were checked with the naked eye and evaluation was made based on the following 5-rank method:

```
5 ——— 4 ——— 3 ——— 2 ——— 1

    (good)  ←      surging      →      (bad)

    not observed  ← overflowing      →   conspicuous
                    from vent hole

        "     "    ← strand breaking →      "
```

Moldability:

The plasticization time was measured by using a screw type injection molding machine at a cylinder temperature of 190°C and a screw rotation number of 150 rpm, and the moldability was expressed by the ratio to the plasticization time observed when the polyacetal resin alone was used (Comparative Example 1). A large value indicates that pellets slipped on the screw, bite was insufficient and the moldability was poor.

Sliding Sound Characteristics:

By using a Suzuki type friction and abrasion tester, the same materials were slid with each other at a linear speed of 30mm/sec and a contract area of 2.0cm² under compression (10kg/cm²) for 10 hours, and the state of generation of the rubbing noise was relatively evaluated by using a noise meter according to the following scale

```
    (good)  5 - 4 - 3 - 2 - 1      (bad)

(not observed) ← initiation of rubbing noise → (quick)

    (small) ← magnitude of rubbing noise → (large)
```

Friction Coefficient:

By using a Suzuki type friction and abrasion tester, the test piece was slid with a metal (S55C) as the mating material at a linear speed of 300mm/sec and a contact area of 2.0cm² under compression of 10kg/cm², and the friction coefficient was measured just after initiation of the sliding and after conducting the sliding for a predetermined time.

Practical Working Test:

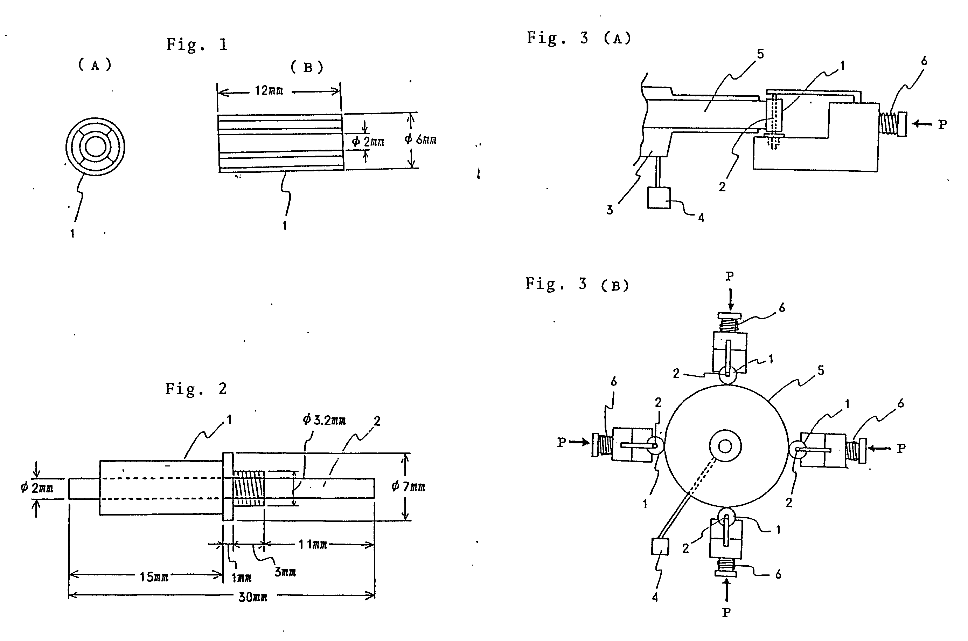

Using a tester shown in Fig.3, comprising a shaft 2 (metal) and a guide roller 1, the dimensions and configuration of which are shown in Fig.1 and Fig. 2, rotation of rotary disc 5 was effected under a contact load of 100g (exerted by spring 6) at a rotation speed of 5500 rpm. The motor load current value was measured by ampere meter 4 as the criterion of the rotation torque just after initiation of the rotation of disc 5 and after conducting the rotation of disc 5 for a predetermined time.

Table 1

| | Composition | | Extrusion Processability | Moldability | Sliding sound (rubbing noise) | Friction coefficient ($\mu$) | | | Practical working test, rotation torque (mA) | |
|---|---|---|---|---|---|---|---|---|---|---|
| | Base resin (% by wt.) | Additive (% by wt.) | | | | Initial stage | After 10 hr. | After 20 hr. | Initial stage | After 40 hr. |
| Ex. 1 | polyacetal (99.8) | glycerol monobehenate (0.2) | 5 | 1.0 | 4 | 0.25 | 0.23 | 0.21 | 133 | 141 |
| Ex. 2 | polyacetal (99.5) | glycerol monobehenate (0.5) | 5 | 1.0 | 5 | 0.23 | 0.22 | 0.20 | 128 | 137 |
| Ex. 3 | polyacetal (98) | glycerol monobehenate (2) | 5 | 1.0 | 5 | 0.21 | 0.20 | 0.18 | 125 | 133 |
| Ex. 4 | polyacetal (96) | glycerol monobehenate (4) | 4 | 1.1 | 5 | 0.20 | 0.20 | 0.16 | 123 | 130 |
| Ex. 5 | polyacetal (98) | ethylene glycol dibehenate (2) | 5 | 1.0 | 5 | 0.22 | 0.22 | 0.21 | 126 | 135 |
| Ex. 6 | polyacetal (98) | glycerol monoerucate (2) | 5 | 1.0 | 5 | 0.22 | 0.22 | 0.22 | 127 | 135 |
| Comp. Ex. 1 | polyacetal (100) | - | 5 | 1 | 1 | 0.32 | 0.35 | 0.38 | 152 | 163 |
| Comp. Ex. 2 | polyacetal (99.5) | stearyl stearate (0.5) | 4 | 1.5 | 3 | 0.28 | 0.25 | 0.23 | 133 | 145 |
| Comp. Ex. 3 | polyacetal (98) | stearyl stearate (2) | 1 | -* | - | - | - | - | - | - |
| Comp. Ex. 4 | polyacetal (99.5) | glycerol monostearate (0.5) | 3 | 1.4 | 3 | 0.27 | 0.25 | 0.22 | 132 | 148 |
| Note | | | | | | | | | | |

*: molding was impossible because kneaded mixture was not bitten in molding machine

## Claims

1. A polyacetal resin composition having an improved sliding property, which comprises a polyacetal resin characterised by having incorporated therein, a fatty acid ester of a fatty acid having at least 21 carbon atoms with a polyhydric alcohol, the fatty acid ester being present in an amount of from 0.05 to 10% by weight based on the combined weight of the polyacetal resin and the fatty acid ester.

2. A polyacetal composition as set forth in claim 1, characterised in that the fatty acid ester is an ester of at least one fatty acid selected from the group consisting of behenic acid, cerotic acid, montanic acid and erucic acid with at least one polyhydric alcohol selected from the group consisting of glycerol, ethylene glycol, polyethylene glycol, propylene glycol and pentaerythritol.

3. A polyacetal resin composition as claimed in claim 1 or 2, characterised in that the composition further comprises one or more additives selected from stabilizers, colorants, lubricants (other than the fatty acid esters set forth in claim 1), release agents, polymers (other than polyacetal resins) and organic modifiers.

4. A sliding part characterised in being prepared from a polyacetal resin composition as set forth in any of claims 1 to 3.

5. A tape-travelling guide roller or guide pole characterised in being prepared from a polyacetal resin composition as set forth in any of claims 1 to 3.

Fig. 3 (A)

Fig. 3 (B)

Fig. 1

(A)

(B)

12mm

φ2mm

φ6mm

Fig. 2

φ7mm

φ3.2mm

11mm

3mm

1mm

30mm

15mm

φ2mm

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 172 691 (POLYPLASTICS CO. LTD.)<br>* claims 1,2; page 4, lines 25,26,28;<br>page 4, line 35 - page 5, line 7; page<br>8, line 11 *<br>--- | 1-3 | C 08 K 5/10<br>C 08 L 59/02 |
| X | EP-A-0 169 721 (POLYPLASTICS CO. LTD.)<br>* claims 1-4; page 2, lines 29,30,32;<br>page 2, line 34 - page 3, line 10; page<br>4, lines 3-10; page 1, lines 7-13 *<br>--- | 1-5 | |
| X | US-A-4 274 986 (Y. IKENAGA et al.)<br>* claim 1; column 2, lines 19-26;<br>column 3, lines 1-10,50-55 *<br>--- | 1-3 | |
| E | EP-A-0 340 931 (POLYPLASTICS CO. LTD.)<br>* claims 1,5,6,8,9; page 2, line 54 -<br>page 3, line 1; page 4, lines 29-33 *<br>----- | 1-5 | |

TECHNICAL FIELDS
SEARCHED (Int. Cl.5)

C 08 K
C 08 L

The present search report has been drawn up for all claims

| Place of search | Date of completion of the search | Examiner |
|---|---|---|
| BERLIN | 08-02-1990 | VOIGTLAENDER R O J |